Europäisches Patentamt

European Patent Office

Office européen des brevets

(19)

(11) Numéro de publication : **0 438 349 B1**

(12) **FASCICULE DE BREVET EUROPEEN**

(45) Date de publication du fascicule du brevet :
**24.11.93 Bulletin 93/47**

(51) Int. Cl.$^5$ : **C10G 35/12,** B01J 8/12

(21) Numéro de dépôt : **91400085.6**

(22) Date de dépôt : **16.01.91**

(54) **Enceinte réactionnelle comprenant un réacteur calandre et des moyens de stratification du courant d'un fluide caloporteur.**

(30) Priorité : **19.01.90 FR 9000664**

(43) Date de publication de la demande :
**24.07.91 Bulletin 91/30**

(45) Mention de la délivrance du brevet :
**24.11.93 Bulletin 93/47**

(84) Etats contractants désignés :
**BE DE GB NL**

(56) Documents cités :
**EP-A- 0 352 175
FR-A- 2 633 635
GB-A- 2 130 498**

(73) Titulaire : **INSTITUT FRANCAIS DU PETROLE
4, avenue de Bois Préau
F-92502 Rueil-Malmaison (FR)**

(72) Inventeur : **Dang Vu, Quang
48, bis, Bd du Général Leclerc
F-92200 Neully (FR)**
Inventeur : **Franckowiak, Sigismond
5, Rue de l'Est
F-92500 Rueil Malmaison (FR)**
Inventeur : **Grehier, Alain
26, rue Mousset Robert
F-75012 Paris (FR)**
Inventeur : **Vacher, Philippe
Haut d'Estressin Chemin Charavel
F-38200 Vienne (FR)**
Inventeur : **Burzynski, Jean-Pierre
25, rue du Brulet
F-69110 Sainte-Foy-Les-Lyons (FR)**

EP 0 438 349 B1

## Description

La présente invention concerne une enceinte réactionnelle comportant un réacteur et des moyens adaptés à ajuster la quantité de chaleur nécessaire au bon déroulement des réactions à effectuer au sein de ce réacteur à la valeur souhaitée à chaque niveau dudit réacteur en fonction, dans le cas des réactions catalytiques, de l'activité du catalyseur au niveau considéré.

La présente invention a également pour objet l'utilisation de ladite enceinte réactionnelle notamment pour effectuer le réformage catalytique de coupes d'hydrocarbures, en particulier de naphtas, sous basse pression, en présence d'au moins un catalyseur. Elle a également pour objet l'utilisation de ladite enceinte réactionnelle pour effectuer la déshydrogénation d'une coupe paraffinique d'hydrocarbures et notamment la déshydrogénation du propane en propylène. Elle a aussi pour objet l'utilisation de ladite enceinte réactionnelle pour effectuer la cyclisation ou déhydrocyclisation des alcanes en composés aromatiques. Elle a enfin pour objet les procédés globalement endothermiques de réformage catalytique, de déshydrogénation et de déhydrocyclisation mis en oeuvre dans ladite enceinte réactionnelle.

De façon plus précise, la présente invention concerne une enceinte réactionnelle qui sera décrite en liaison avec les modes de réalisation représentés sur les figures 1 à 11 annexées et données à titre illustratif, mais non limitatif.

La figure 1 illustre schématiquement une enceinte réactionnelle (E) selon l'invention.

La figure 2 correspond à une coupe horizontale suivant l'axe AA de l'enceinte réactionnelle (E) schématisé sur la figure 1.

Les figures 3 et 4 correspondent à une coupe verticale de l'enceinte réactionnelle (E), coupe effectuée dans le cas de la figure 3 dans l'espace (ou le canal) compris entre deux cellules réactionnelles catalytiques élémentaires voisines et au niveau d'une cellule réactionnelle dans le cas de la figure 4.

La figure 5 illustre un modèle préféré de réacteur (5) compris dans l'enceinte réactionnelle (E) et utilisable notamment dans les procédés de réformage selon l'invention, ce modèle de réacteur correspondant à celui décrit par la demanderesse dans la demande de brevet français déposée le 22 juillet 1988 sous le numéro d'enregistrement national EN. 88/10.039 dont la description sommaire sera incluse ci-après par voie de référence (FR-A-2 634 396).

La figure 6 illustre une variante préférée d'un des dispositifs essentiels contenus dans le réacteur (5): une cellule réactionnelle catalytique élémentaire.

La figure 7 correspond à la coupe horizontale AA du réacteur (5) de la figure 5.

La figure 8 correspond à une coupe verticale du réacteur (5) de la figure 5, coupe effectuée dans une cellule réactionnelle catalytique élémentaire.

La figure 9 représente une coupe verticale du réacteur (5) de la figure 5, coupe effectuée dans l'espace (ou le canal) compris entre deux cellules réactionnelles catalytiques élémentaires voisines.

Les figures 10A, 10B et 10C donnent, à titre d'exemples, des profils de conduits utilisables dans les espaces ou canaux compris entre deux cellules réactionnelles catalytiques élémentaires voisines.

La figure 11 correspond à une coupe verticale d'un réacteur (5) du même type que celui représenté sur la figure 5, coupe effectuée au niveau d'une cellule réactionnelle catalytique élémentaire, dans le cas d'un réacteur (5) ayant un distributeur individuel (52.1) et un collecteur individuel (52.3) de forme, préférée selon la présente invention, sensiblement prismatique.

Sur les figures, la lettre C et les flèches C représentent la charge et le cheminement de la charge à traiter et de la charge traitée et la lettre G et les flèches G le fluide et le cheminement du fluide caloporteur.

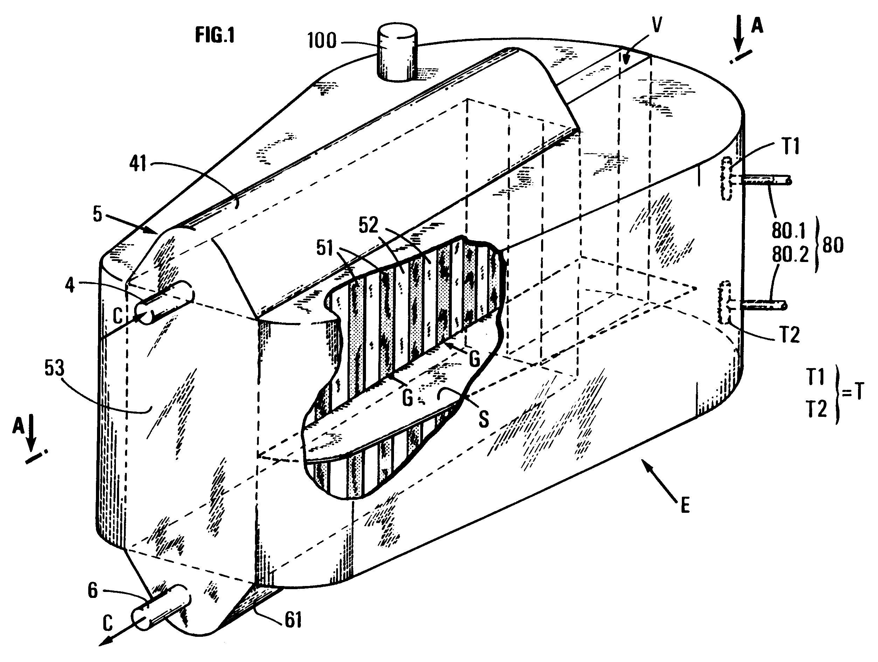

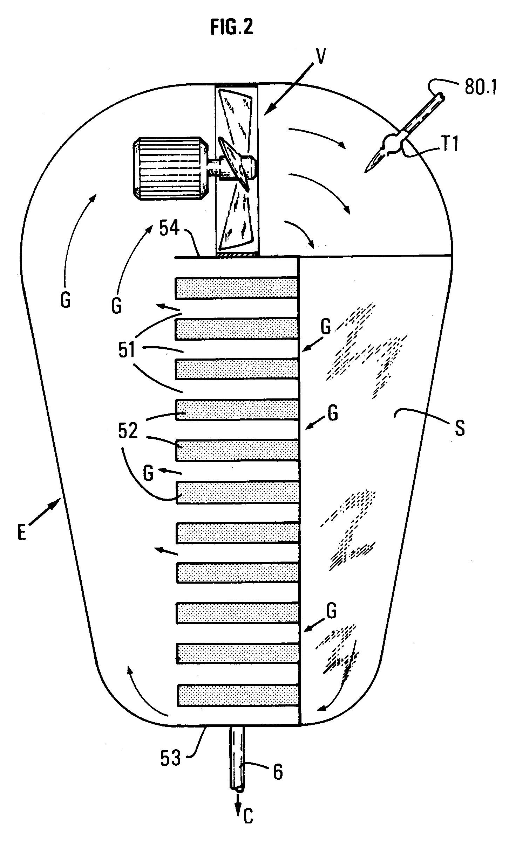

La présente invention concerne donc une enceinte réactionnelle (E), dont une forme de réalisation est illustrée sur les figures 1 et 2, comprenant:

- un réacteur calandre (5) de forme allongée comportant à une première extrémité au moins un moyen (4) d'introduction d'une charge (C), liquide ou gazeuse, à traiter, à une deuxième extrémité au moins un moyen (6) d'évacuation de la charge traitée, au moins deux cellules réactionnelles élémentaires (52), non contiguës entre elles et non contiguës au parois (53, 54) dudit réacteur (parois habituellement sensiblement verticales), reliées chacune à partir de l'une de leur extrémité audit moyen d'introduction (4) de ladite charge, habituellement par l'intermédiaire du distributeur général (41) de la charge, et à partir de leur autre extrémité audit moyen d'évacuation (6) de ladite charge traitée, habituellement par l'intermédiaire du collecteur général (61) de la charge traitée, lesdites cellules réactionnelles (52) contenant dans au moins une partie de leur volume au moins un solide pulvérulent et (lesdites cellules) étant séparées les unes des autres, ainsi que des parois du réacteur, par un canal ou espace interne creux (échangeur de chaleur) (51) qui s'étend sur une longueur au moins égale à celle sur laquelle s'étend ledit solide pulvérulent contenu dans lesdites cellules réactionnelles,
- au moins un moyen (V) de mise en circulation dans chaque canal (51) dudit réacteur (5), de manière sensiblement transversale par rapport à la direction globale de circulation de la charge à traiter dans ledit réacteur (5), d'au moins un fluide caloporteur contenu dans ladite enceinte réactionnelle, ledit moyen de mise en circulation étant habituellement un ventilateur et ledit fluide caloporteur étant habituellement un gaz (ou un mélange de gaz),

- au moins n moyen(s) (S) de stratification du courant de fluide caloporteur, le(s)dit(s) moyen(s) (S) étant positionné(s) de manière sensiblement perpendiculaire à la direction globale de circulation de la charge à traiter dans ledit réacteur et en amont, par rapport au sens de circulation dudit fluide caloporteur, de la face des canaux (51) par laquelle ledit fluide caloporteur pénètre dans lesdits canaux, n étant un nombre entier supérieur ou égal à 1, le plus souvent supérieur ou égal à 2,
- au moins n + 1 moyens thermiques (T) modifiant chacun l'enthalpie d'une partie dudit fluide caloporteur, chacun desdits moyens (T) étant positionné de part et d'autre d'un plan défini par l'un desdits moyens (S) de stratification et en amont, par rapport au sens de circulation dudit fluide caloporteur, de la face des canaux par laquelle ledit fluide caloporteur pénètre dans lesdits canaux; ces moyens thermiques (T), par exemple $T_1$ et $T_2$, sont habituellement alimentés en énergie par au moins un conduit (80), par exemple par les conduits (80.1) et (80.2) schématisés sur la figure 1.

Ces moyens thermiques (T) sont le plus souvent des moyens permettant d'apporter des calories au fluide caloporteur (c'est-à-dire des moyens de chauffage) par convection lors de son passage dans les canaux (51) en traversant le réacteur (5). Divers moyens de chauffage peuvent être ainsi utilisés, tels que par exemple des résistances électriques ou des brûleurs. On emploiera le plus souvent des brûleurs, par exemple des brûleurs radiant (du genre Pyrocore par exemple) dont le tube de radiation sera de préférence placé dans le plan de circulation du fluide caloporteur: ainsi, dans le cas le plus fréquent d'une enceinte réactionnelle (E) comportant un réacteur (5) sensiblement vertical, au moins un moyen (V) tel qu'un ventilateur d'axe sensiblement horizontal et au moins n moyens (S) de stratification sensiblement horizontaux, le ou lesdits tubes de radiation seront sensiblement horizontaux et placés au sein du courant des gaz caloporteurs circulant de manière sensiblement horizontale. Les brûleurs utilisés sont habituellement alimentés chacun en combustible gazeux, liquide ou solide, de préférence gazeux ou liquide, par au moins un conduit (80). La présente invention comprend également la possibilité d'utiliser un ou plusieurs moyens thermiques de refroidissement du fluide caloporteur.

L'enceinte réactionnelle (E) selon la présente invention comprend un réacteur calandre (5) dont les cellules réactionnelles (52) contiennent dans au moins une partie de leur volume au moins un solide pulvérulent qui est le plus souvent un solide catalytique ou qui comprend une portion de solide catalytique. Ce lit de solide ou lit de catalyseur peut être un lit fixe, un lit mobile, un lit bouillonnant ou un lit fluidisé. La charge peut traverser ce lit de solide de façon verticale, oblique ou horizontale lorsque l'enceinte (E) et le réacteur (5) sont sensiblement verticaux.

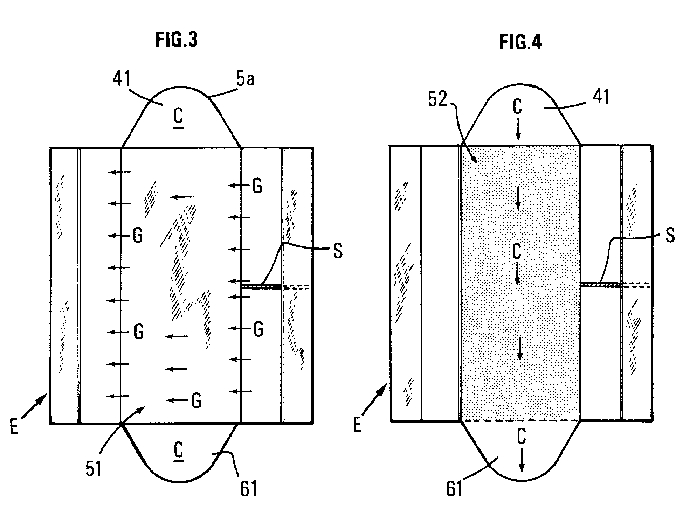

Dans la forme de réalisation la plus courante de l'enceinte réactionnelle (E) telle que représentée en perspective sur la figure 1, en coupe horizontale selon l'axe AA sur la figure 2, en coupe verticale au niveau d'un canal (51) sur la figure 3 et au niveau d'une cellule réactionnelle (52) sur la figure 4, le réacteur (5) a la forme globale d'un parallélépipède rectangle, le ou les moyens de mise en circulation (V) du fluide caloporteur sont situés dans le prolongement du réacteur (5) sensiblement dans le volume compris entre les plans passant par 4 des faces dudit parallélépipède et le ou les moyens de stratification (S) ainsi que les moyens thermiques (T) modifiant chacun l'enthalpie d'une partie dudit fluide caloporteur sont situés dans un volume compris entre le ou lesdits moyens de circulation (V) et la face du parallélépipède rectangle à travers laquelle le fluide caloporteur pénètre. A titre d'exemple tel que schématisé sur la figure 1, le réacteur (5), sensiblement parallélépipèdique et vertical, possède un plan de symétrie dans lequel est positionné le ventilateur (V) dont l'axe est perpendiculaire audit plan de symétrie, le moyen (S) de stratification est sensiblement horizontal et s'étend sur toute la largeur du réacteur (5) entre les parois (53) et (54) et les moyens thermiques $(T_1)$ et $(T_2)$ sont positionnés dans le volume libre entre le ventilateur (V) et l'extrémité du moyen de stratification située au niveau du plan de la paroi (54) du réacteur de part et d'autre du plan défini par le moyen (S) de stratification.

L'enceinte réactionnelle (E) peut comporter un seul moyen de mise en circulation (V) du fluide caloporteur ou plusieurs moyens de mise en circulation (V), ces moyens étant le plus souvent des ventilateurs; lorsque l'on emploie un seul ventilateur, son diamètre sera de préférence sensiblement voisin de la valeur de la hauteur, ou distance entre l'entrée (4) de la charge et la sortie (6) de la charge traitée, du réacteur (5), et, lorsque l'on emploie plusieurs ventilateurs, leur nombre sera de préférence égal à n + 1, chacun desdits ventilateurs étant alors de préférence situé de part et d'autre d'un plan défini par l'un desdits n + 1 moyens de stratification.

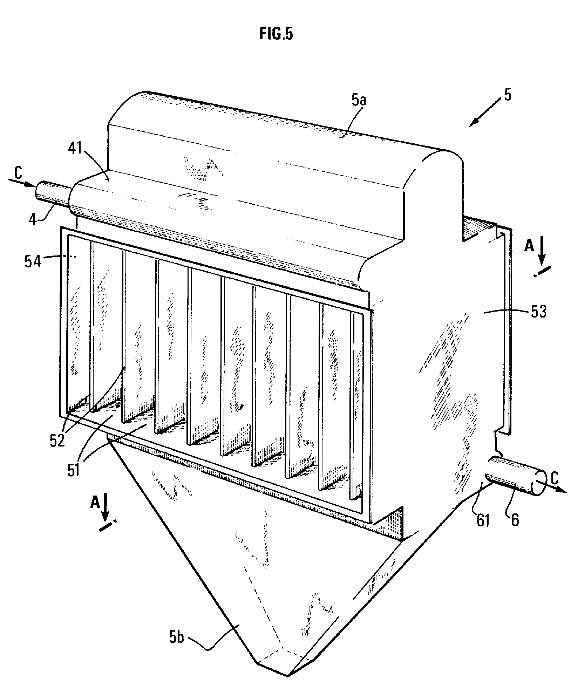

Dans une forme de réalisation, particulièrement bien adaptée au cas des réactions globalement endothermiques, par exemple au cas du réformage catalytique, l'enceinte réactionnelle (E) de la présente invention comporte un réacteur (5) tel que celui schématisé sur la figure 5. Ce réacteur (5) (voir figures 5 à 11) comporte les éléments essentiels décrits ci-avant en liaison avec les figures 1 à 4 et comporte en outre de préférence:

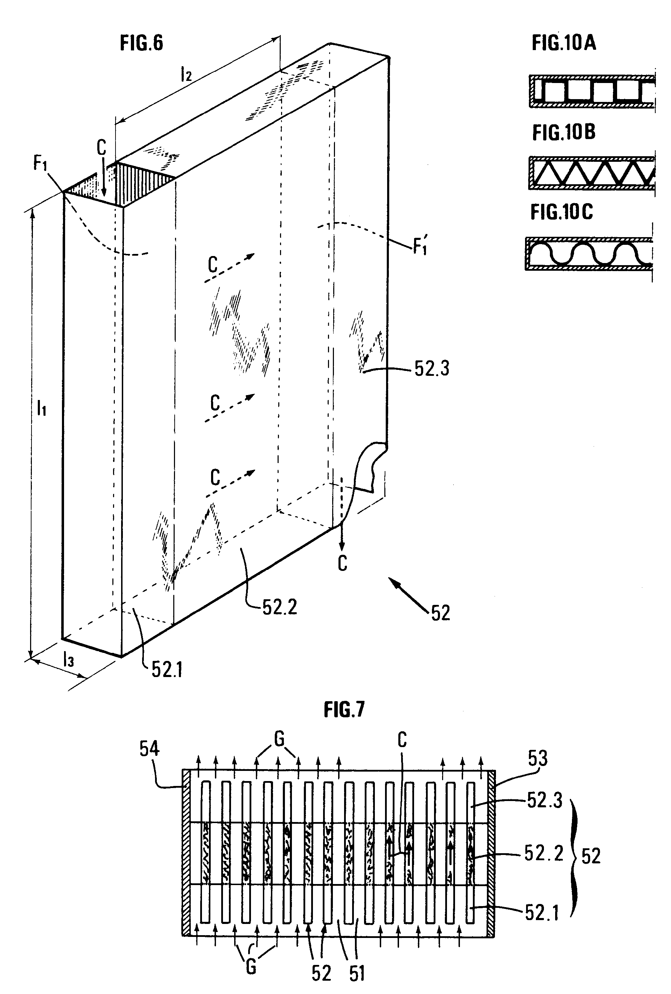

- au moins un moyen d'introduction (5a) de solide pulvérulent, par exemple de catalyseur frais, à la partie supérieure dudit réacteur, à proximité du moyen d'introduction (4) de la charge,
- au moins un moyen d'évacuation (5b) du solide pulvérulent (on écrira catalyseur dans la suite de la description) à la partie inférieure dudit réacteur, à proximité du moyen (6) d'évacuation de la charge traitée,
- au moins deux cellules réactionnelles élémentaires (52), sensiblement parallèles entre elles, séparées les unes des autres, ainsi que des parois (53, 54) dudit réacteur (5), par un canal (51) sensiblement parallélépipédique, chacune desdites cellules étant composée des trois compartiments suivants (voir figure 6):
- un distributeur individuel de la charge (52.1),
- un collecteur individuel de la charge traitée (52.3),
- un lit catalytique (mobile par exemple) (52.2), inséré entre ledit distributeur individuel et ledit collecteur individuel.

Ledit lit (52.2) est ouvert, sur toute une face mince sensiblement verticale $F_1$, sur ledit distributeur individuel (52.1) et ouvert, sur toute l'autre face mince $F'_1$ sensiblement parallèle à $F_1$, sur ledit collecteur individuel (52.3). Ces faces minces $F_1$ et $F'_1$ sont définies chacune par une paroi perméable aux fluides et imperméable aux particules catalytiques solides (par exemple, une grille de type Johnson ou à base de fils profilés ou tout autre moyen équivalent).

Chacune des deux faces larges sensiblement verticales dudit lit (52.2) est fermée par une paroi étanche dont les prolongements au-delà dudit lit (52.2) forment des parois étanches du distributeur individuel (52.1) et du collecteur individuel (52.3) correspondants.

Les faces ou parois des cellules réactionnelles catalytiques élémentaires (52) sont par exemple fabriquées à partir de tôles minces plates ou tous moyens équivalents.

Dans le cas où chaque lit (52.2) est mobile, celui-ci communique, par sa face mince supérieure sensiblement horizontale $F_2$, avec le (ou les) moyen(s) d'introduction de catalyseur frais (5a) et, par sa face mince inférieure sensiblement horizontale $F'_2$, avec le (ou les) moyen(s) d'évacuation du catalyseur usé (5b).

Le réacteur (5) selon la forme de réalisation schématisée en particulier sur la figure 5 renferme en outre:
- au moins un distributeur général de la charge (41), relié au(x) moyen(s) d'introduction de la charge (4) et à tous les distributeurs individuels de la charge (52.1) par une de leurs faces minces sensiblement horizontales, et
- au moins un collecteur général de la charge traitée (61), relié au(x) moyen(s) d'évacuation de la charge traitée (6) et à tous les collecteurs individuels de la charge traitée (52.3) par une de leurs faces minces sensiblement horizontales qui est sensiblement diagonalement opposée, par rapport au centre du lit catalytique (52.2) correspondant, à la face mince sensiblement horizontale du distributeur individuel (52.1) correspondant par laquelle celui-ci est relié au distributeur général (41).

Ledit réacteur (5) renferme également:
- au moins une paroi étanche reliant entre eux les côtés supérieurs sensiblement horizontaux des faces larges en regard de deux lits catalytiques (52.2) voisins,
- au moins une paroi étanche reliant entre eux les côtés inférieurs sensiblement horizontaux desdites faces larges en regard de deux lits catalytiques (52.2) voisins,
- au moins une paroi étanche reliant le côté supérieur sensiblement horizontal de la face large du lit catlytique (52.2) le plus proche de chaque paroi (53 ou 54) du réacteur (paroi sensiblement verticale et sensiblement parallèle audit lit) à ladite paroi, et
- au moins une paroi étanche reliant le côté inférieur sensiblement horizontal de la face large du lit catalytique (52.2) le plus proche de chaque paroi (53 ou 54) du réacteur (paroi sensiblement verticale et sensiblement parallèle audit lit) à ladite paroi.

Ces quatre catégories de parois étanches sont par exemple fabriquées à partir de tôles minces, de préférence de tôles minces ondulées, la surface développée de chacune d'elles étant avantageusement comprise entre 1 et 500 fois, de préférence entre 2 et 50 fois la surface des parois (par exemple des tôles) verticales des lits catalytiques qu'elles relient.

Les distributeurs individuels (52.1) et les collecteurs individuels (52.3) ont avantageusement la même épaisseur $l_3$ et la même hauteur $l_1$ que les lits catalytiques (52.2).

Les cellules réactionnelles élémentaires (52) sont habituellement sensiblement parallélépipédiques, sensiblement parallèles entre elles (et aux parois (53) et (54) dudit réacteur). La figure 6 représente en perspective une cellule catalytique élémentaire ayant la forme d'un parallélépipède rectangle. Cette cellule est composée, selon la réalisation schématisée sur la figure 6, des trois compartiments sensiblement parallélépipédiques (rectangles sur la figure 6) suivants:
- un distributeur individuel (52.1) de la charge,
- un collecteur individuel (52.3) de la charge traitée,
- un lit de solide pulvérulent (52.2) (catalyseur) inséré entre ledit distributeur individuel et ledit collecteur individuel.

Cette forme de distributeur et de collecteur de la cellule réactionnelle est également visible sur la figure 8 qui est une vue en coupe verticale au niveau d'une cellule réactionnelle (52) de l'enceinte réactionnelle (E) selon l'invention comportant un réacteur (5) tel que celui schématisé sur la figure 5 et comportant deux moyens $(S_1)$ et $(S_2)$ de stratification du fluide caloporteur.

La figure 9 est une vue en coupe verticale de cette même enceinte réactionnelle (E) au niveau d'un canal ou espace interne creux (échangeur de chaleur) (51).

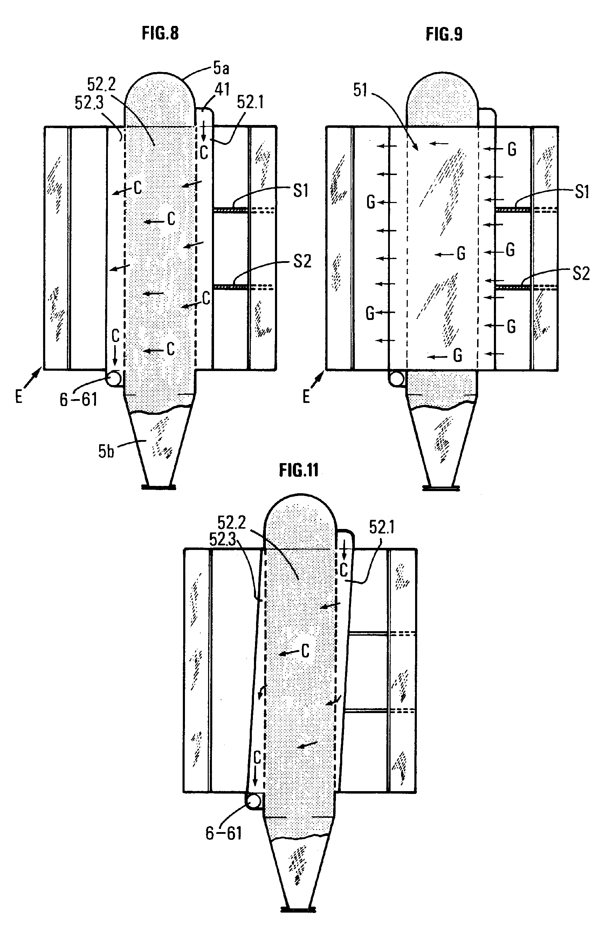

Selon une forme préférée de réalisation permettant une meilleure distribution de la charge dans le lit de catalyseur, chacun des distributeurs individuels (52.1) de charge à traiter a une forme sensiblement prismatique, dont la section selon un plan horizontal a une surface plus grande à proximité du distributeur général (41) de la charge, qu'à proximité du collecteur général (61) de la charge traitée; le collecteur individuel (52.3) de la charge traitée peut avoir sensiblement la forme d'un parallélépipède rectangle dont la section, selon un plan sensiblement horizontal, a une surface sensiblement identique à proximité du distributeur général (41) de la charge et à proximité du collecteur général (61) de la charge traitée ou de préférence une forme sensiblement prismatique (comme cela est visible sur la coupe verticale de l'enceinte réactionnelle (E), au niveau d'une cellule réactionnelle (52), schématisée sur la figure 11) dont la section, selon un plan sensiblement horizontal, a une surface moins grande à proximité du distributeur général (41) de la charge qu'à proximité du collecteur général (61) de la charge. Dans ce cas, ledit lit de solide pulvérulent (52.2) inséré entre ledit distributeur individuel et ledit collecteur individuel a le plus souvent sensiblement la forme d'un parallélépipède rectangle.

Dans la forme de réalisation du réacteur (5) selon la figure 5, chaque canal ou espace interne creux (échangeur de chaleur) (51) sensiblement parallélépidédique, situé entre deux cellules (52) ou situé entre une paroi sensiblement verticale (53 ou 54) du réacteur et la cellule (52) la plus proche de cette paroi et sensiblement parallèle à ladite paroi, est destiné à la circulation des gaz de chauffe. Ainsi, chaque cellule (52) se trouve prise en sandwich entre deux espaces libres de catalyseur. Ces espaces ou canaux (51) sont ouverts sur toutes leurs "faces" sensiblement perpendiculaires aux parois latérales sensiblement verticales (53 et 54) du réacteur, afin de permettre l'entrée d'un fluide caloporteur (par exemple à base de gaz de chauffe) dans le réacteur, puis sa circulation entre les cellules (52) et enfin son évacuation hors du réacteur.

Selon une forme de réalisation préférentielle de l'enceinte réactionnelle (E), le réacteur (5) est conçu de manière à ce que la hauteur $l_1$, la largeur $l_2$ et l'épaisseur $l_3$ de chaque lit de catalyseur (52.2) obéissent aux conditions suivantes (1 mm = $10^{-3}$ m):

. $l_1 > l_2 > l_3$ avec, de préférence, $l_1 \geqq 2\,l_2$ ;

. 50 mm $\leqq l_2 \leqq$ 10.000 mm, de préférence 100 mm $\leqq l_2 \leqq$ 5.000 mm ;

. 2 mm $\leqq l_3 \leqq$ 2.000 mm, de préférence 5 mm $\leqq l_3 \leqq$ 500 mm.

Une largeur $l_2$ trop faible peut produire une maldistribution des réactifs entre les lits catalytiques et n'est donc pas souhaitable; à l'inverse, une largeur $l_2$ trop élevée aurait tendance à faire augmenter la pression moyenne au sein du catalyseur, ce qui n'est pas non plus souhaitable.

Dans le cas de l'application au réformage catalytique, il peut être préférable afin d'avoir une meilleure conversion des essences lors de l'utilisation de l'enceinte réactionnelle (E) selon l'invention, que l'épaisseur $l_3$ de chaque lit catalytique (52.2) ($l_3$ correspondant également à l'écartement entre les canaux ou espaces internes creux (51) échangeurs de chaleur) soit telle que:

$$\frac{l_3}{2} \geqq dp_m \geqq \frac{l_3}{200}, \text{ de préférence } \frac{l_3}{5} \geqq dp_m \geqq \frac{l_3}{100},$$ où $dp_m$ correspond au diamètre hydraulique moyen d'un grain de catalyseur qui représente la taille moyenne d'un grain de catalyseur (dp = diamètre hydraulique d'un grain de catalyseur = $\frac{6V}{S}$, où V est son volume et S sa surface).

Lorsque les grains de catalyseur sont des sphères, $dp_m$ représente le diamètre moyen desdites sphères.

On peut aménager (voir figure 10), dans chaque canal ou espace interne creux (51) sensiblement parallélépipédique situé entre deux cellules réactionnelles catalytiques élémentaires (52) voisines et dans chaque canal ou espace interne creux (51) sensiblement parallélépipédique situé entre une paroi (53, 54) du réacteur et la cellule réactionnelle catalytique élémentaire (52) la plus proche de cette paroi et sensiblement parallèle à cette paroi, des conduits adjacents, sensiblement parallèles entre eux, et de préférence sensiblement perpendiculaires à la direction globale de circulation de la charge à traiter (c'est-à-dire sensiblement horizontaux dans le cas d'une enceinte réactionnelle (E) sensiblement verticale comportant un réacteur (5) sensiblement vertical par exemple tel que celui schématisé sur la figure 5).Ces conduits peuvent être réalisés au moyen de tôles ondulées, les sections desdits conduits ayant au choix l'une des formes suivantes: triangulaire (figure 10B), carrée, rectangulaire, polygonale (figure 10A), d'une portion de sinusoïde (figure 10C) ou équivalente.

La présente invention a également pour objet l'utilisation de ladite enceinte réactionnelle (E) pour effectuer le réformage catalytique de coupes d'hydrocarbures, en particulier de naphtas, pour la fabrication des essences à haut indice d'octane, sous basse pression, ainsi que pour effectuer la déshydrogénation des coupes paraffiniques d'hydrocarbures en vue de fabriquer des oléfines, par exemple la transformation du propane en propylène et également pour effectuer la cyclisation ou déhydrocyclisation des alcanes en composés aromatiques.

L'enceinte réactionnelle (E) selon la présente invention, et en particulier celle comportant un réacteur (5) tel que schématisé sur la figure 5 ayant au moins un moyen (5a) d'introduction en continu de catalyseur frais et au moins un moyen (5b) d'évacuation en continu du catalyseur usé (5b), est particulièrement bien adaptée pour effectuer le réformage catalytique de coupes d'hydrocarbures.

La présente invention concerne également un procédé de réformage catalytique, effectué dans une enceinte réactionnelle (E) telle que décrite ci-avant, dans lequel on fait circuler une charge d'hydrocarbures, dans des conditions de réformage, en présence d'hydrogène, à travers une zone de réaction (voir figures 1 à 11) dans laquelle la pression est comprise entre 0,05 et 2,0 MPa, de préférence entre 0,05 et 1,0 MPa, ladite zone renfermant:

- d'une part, au moins deux espaces réactionnels catalytiques élémentaires (52) non adjacents, de préférence sensiblement parallélépipédiques, composés chacun de préférence d'une zone individuelle de distribution (52.1), de préférence sensiblement parallélépipédique, d'une zone individuelle de collecte (52.3), de préférence sensiblement parallélépipédique, et d'un lit de catalyseur (52.2), inséré entre les deux distes zones (52.1 et 52.2), de préférence sensiblement parallélépipédique;
- d'autre part, des espaces internes creux (51), de préférence sensiblement parallélépipédiques.

Lesdits espaces réactionnels catalytiques élémentaires (52) et lesdits espaces internes creux (51) sont disposés de préférence sensiblement verticalement ou sensiblement parallèlement entre eux, chaque espace réactionnel catalytique élémentaire (52) étant pris en sandwich entre au moins deux espaces internes creux (51) dans lesquels circulent de préférence sensiblement horizontalement le fluide caloporteur (gaz de chauffe définis précédemment) qui apporte la chaleur nécessaire à la réaction de réformage.

Dans ce procédé perfectionné, le fluide caloporteur est divisé en n strates, l'enthalpie de chaque strate étant ajustée à la valeur désirée par apport de calories, ledit apport de calories étant effectué dans ou à proximité de la zone de stratification avant l'entrée du fluide caloporteur dans les espaces internes creux (51), lesdites strates de fluide caloporteur apportant chacune la chaleur nécessaire à la réaction de réformage, procédé dans lequel en outre:

- on envoie la charge d'hydrocarbures à l'intérieur d'une zone générale de distribution (41),
- on répartit ladite charge, en provenance de la zone générale de distribution (41), dans la zone individuelle de distribution (52.1) de chaque espace réactionnel catalytique élémentaire (52),
- en envoie ladite charge, à partir de chaque zone individuelle de distribution (52.1), dans chaque lit catalytique correspondant (52.2) qu'elle traverse sensiblement horizontalement, la charge et le fluide caloporteur circulant alors sensiblement parallèlement et à co-courants,
- on récupère la charge traitée, à la sortie de chaque lit catalytique (52.2), dans la zone individuelle de collecte (52.3) correspondante,
- on évacue la charge traitée de chaque zone individuelle de collecte (52.3) dans une zone générale de collecte (61) par laquelle on soutire ensuite ladite charge traitée.

De plus, dans chaque espace réactionnel catalytique élémentaire (52), la position de l'entrée de la charge dans la zone individuelle de distribution (52.1) est sensiblement diagonalement opposée, par rapport au centre du lit catalytique (52.2) correspondant, à la position de sortie de la charge traitée de la zone individuelle de collecte (52.3) correspondante.

Chaque lit catalytique (52.2) est préférentiellement de type mobile, les grains de catalyseur étant par exemple introduits en continu à la partie supérieure de chaque lit catalytique (52.2) et soutirés en continu à la partie inférieure de chaque lit catalytique (52.2) après avoir cheminé de haut en bas à l'intérieur de chaque lit (52.2).

Les grains de catalyseur peuvent alors être soutirés par l'extrémité inférieure par exemple d'une zone évasée ayant la forme d'un cône ou d'une pyramide dont le sommet est tourné vers le bas, ladite zone étant reliée à la partie inférieure de chaque lit catalytique (52.2).

Il est avantageux que le fluide caloporteur circule, à l'intérieur de chaque espace interne creux (51), dans des conduits adjacents (voir figures 10) de préférence sensiblement horizontaux à base de tôles ondulées, les sections desdits conduits ayant au choix l'une des formes suivantes: triangulaire (figure 10B), carrée, rectangulaire, polygonale (figure 10A), d'une portion de sinusoïde (figure 10C) ou équivalente. Ces conduites permettent en particulier d'assurer une circulation plus homogène du fluide caloporteur dans tous les espaces internes creux (51) et d'assurer constamment audit fluide une circulation très sensiblement parallèle à celle de la charge dans les lits catalytiques (52.2).

Une mise en oeuvre préférée des procédés selon l'invention consiste en ce que la hauteur $l_1$, la largeur $l_2$ et l'épaisseur $l_3$ de chaque lit de catalyseur (52.2) répondent aux conditions suivantes (1 mm = $10^{-3}$ m):

. $1_1 > 1_2 > 1_3$ avec, de préférence, $1_1 \geqq 21_2$ ;

. 50 mm $\leqq 1_2 \leqq$ 10.000 mm, de préférence 100 mm $\leqq 1_2 \leqq$ 5.000 mm ;

. 2 mm $\leqq 1_3 \leqq$ 2.000 mm, de préférence 5 mm $\leqq 1_3 \leqq$ 500 mm.

Afin d'augmenter l'efficacité des procédés selon l'invention, il peut être préférable que l'épaisseur $1_3$ de chaque lit catalytique (52.2) ($1_3$ correspond également à l'écartement entre les canaux ou espaces internes creux (51) échangeurs de chaleur) soit telle que:

$$\frac{1_3}{2} \geqq dp_m \geqq \frac{1_3}{200}, \text{ de préférence } \frac{1_3}{5} \geqq dp_m \geqq \frac{1_3}{100}, \text{ où } dp_m \text{ correspond au diamètre hydraulique moyen d'un}$$

grain de catalyseur qui représente la taille moyenne d'un grain de catalyseur.

L'invention est également relative à un procédé de réformage catalytique dans lequel on fait circuler une charge d'hydrocarbures, habituellement liquide, dans des conditions de réformage, en présence d'hydrogène, successivement à travers deux zones de réaction, dans au moins la première desquelles ledit procédé se déroule comme décrit précédemment.

Dans les différents procédés selon l'invention, le débit massique horaire de charge d'hydrocarbures à traiter est habituellement égal à 1 à 10 fois, de préférence 2 à 5 fois, la masse totale de catalyseur présent dans la ou les zones de réaction.

Dans les cas où le fluide caloporteur utilisé est constitué de fumées (ou gaz de chauffe), il est préférable de soutirer et donc d'éliminer une partie de ces gaz de chauffe (par exemple par l'intermédiaire d'une cheminée (100) représentée sur la figure 1), le taux de recyclage des gaz de chauffe (rapport pondéral gaz de chauffe recyclés sur gaz de chauffe soutirés et non recyclés) étant alors utilement compris entre environ 0,5 et environ 200, de préférence entre environ 2 et environ 50.

Dans une forme de mise en oeuvre préférée du procédé de réformage selon la présente invention, le fluide caloporteur est divisé en 3 strates par 2 moyens ($S_1$) et($S_2$) de stratification, chaque strate est chauffée de manière à ce que la température de sortie du fluide caloporteur mesurée, au niveau de chaque strate, dans le plan sensiblement perpendiculaire aux parois latérales sensiblement verticales (53 et 54) du réacteur, dans la zone de sortie du fluide caloporteur sensiblement en face d'un canal (51) soit telle que la strate inférieure située à proximité du collecteur général (61) de la charge traitée ait une température $Ts^3$, que la strate supérieure située à proximité du distributeur général (41) de la charge ait une température $Ts^1$ et que la strate intermédiaire située entre les deux strates décrites ci-avant ait une température $Ts^2$, lesdites températures étant telles que $Ts^3$ soit supérieure ou égale à $Ts^2$ qui est elle même supérieure ou égale à $Ts^1$ et que $Ts^3$ soit supérieure à $Ts^1$.

De manière préférée, les strates définies par les moyens de stratification (S) ont des volumes sensiblement égaux.

A titre indicatif, une des charges d'hydrocarbures à réformer peut contenir habituellement, en volume, 35 à 80 % d'hydrocarbures paraffiniques, 14 à 51 % d'hydrocarbures naphténiques et 2 à 18 % d'hydrocarbures aromatiques. Elle est formée en général essentiellement d'essences. Cette charge est par exemple un naphta distillant entre environ 55 et environ 225°C.

Le réformage selon l'invention est réalisé sur un mélange de ladite charge et d'hydrogène recyclé (ou "hydrogène de recyclage"), dans une proportion telle que le rapport molaire hydrogène sur charge d'hydrocarbures à traiter (H2/HC) est habituellement compris entre environ 1 et 100, de préférence entre environ 2 et 10.

Le réformage s'effectue à une température usuellement comprise entre environ 300 et 700°C, de préférence entre environ 400 et 600°C.

On peut utiliser tout catalyseur de réformage connu de l'homme de l'art, conditionné en grains par exemple sensiblement sphériques.

On emploiera par exemple des catalyseurs supportés à base d'au moins un métal noble du groupe VIII de la classification périodique des éléments, généralement le platine, de préférence dopé par au moins un promoteur tel que l'indium, le germanium, l'iridium (US-A-2.848.377), le rhénium (US-A-3.415.737), l'étain (US-A-3.700.588). Généralement, on incorpore aux catalyseurs un halogène tel que le chlore ou le fluor (FR-B-2.600.668).

Les supports des catalyseurs de réformage sont usuellement choisis parmi les oxydes des métaux des groupes II, III et/ou IV de la classification périodique des éléments, tels que, par exemple, les oxydes de magnésium, d'aluminium, de titane, de zirconium, de thorium ou de silicium, pris seuls ou mélange entre eux ou avec des oxydes d'autres éléments de la classification périodique, tels que par exemple le bore. On peut utiliser aussi du charbon. On peut également utiliser des zéolites ou tamis moléculaires de type X ou T, ou de type mordénite ou faujasite ou de type ZSM-5, ZSM-4, ZSM-8 L, etc... ainsi que des mélanges d'oxydes de métaux des groupes II, III et/ou IV avec du matériel zéolitique.

D'une manière préférée, on emploie un support formé principalement d'alumine, c'est-à-dire dont l'alumine représente au moins 50 % en poids par rapport au poids total du support et de préférence au moins 80 % en poids, et d'une manière la plus préférée, on emploie de l'alumine seule.

La charge d'hydrocarbures à réformer, de préférence désulfurée, par exemple un mélange d'essences provenant de la distillation directe de pétrole brut et/ou de la distillation de produits de pétrole craqué thermiquement ou catalytiquement, est envoyée dans l'unité de réformage où elle se mélange avec de l'hydrogène dans un rapport généralement d'environ 1 à 100, de préférence d'environ 2 à 10 moles d'hydrogène par mole de charge d'hydrocarbures à traiter.

Le mélange ainsi formé qui se trouve alors conformément à l'invention sous une pression comprise entre 0,05 et 2,0 MPa, de préférence entre 0,05 et 1,0 MPa, est ensuite de préférence indirectement préchauffé habituellement jusqu'à une température comprise entre environ 300 et 700°C, avantageusement entre environ 400 et 600°C.

Ledit mélange passe ensuite, par le conduit (4), dans le réacteur (5) conforme à l'invention et décrit postérieurement, ledit réacteur contenant un catalyseur de réformage défini précédemment.

Dans le réacteur (5), les essences sont réformées, leurs molécules étant au moins partiellement transformées au moyen de réactions de déshydrogénation, d'isomérisation, éventuellement de déshydrocyclisation et de craquage, en des composés aux propriétés anti-détonnantes nettement améliorées.

Ces réactions résultent en une grande production d'hydrogène et une forte demande calorifique.

Dans les unités classiques à réacteurs adiabatiques, l'endothermicité des réactions fait chuter rapidement la température et, pour poursuivre les opérations de réformage, il est alors nécessaire de réaliser au moins un réchauffage intermédiaire, en envoyant les réactifs sur un ou plusieurs fours extérieurs.

Les procédés de l'invention sont caractérisés notamment en ce que l'on apporte directement au sein du réacteur, au moyen d'un fluide caloporteur, de préférence à base de fumées (ou gaz de chauffe), par exemple en provenance de la combustion à l'air de mélanges liquides ou gazeux d'hydrocarbures, tels que du gaz naturel, du gaz de raffinerie, circulant entre les lits de catalyseur contenus dans le réacteur (5), de la chaleur nécessaire aux réactions de réformage. Le circuit du fluide caloporteur n'est pas ouvert sur le système réactionnel.

Pour éviter une trop grande accumulation de coke, le catalyseur peut être constamment renouvelé; pour cela, du catalyseur usé est par exemple soutiré en continu vers le bas du réacteur (5) et continuellement remplacé par du catalyseur frais (et/ou régénéré) introduit vers le sommet du réacteur (5) (fonctionnement appelé en lit mobile).

Selon une forme de réalisation du procédé de réformage selon l'invention, le système réactionnel ne comporte qu'un seul réacteur (5), l'effluent réactionnel sortant dudit réacteur par le conduit (6) pour venir préchauffer le mélange (hydrocarbures + hydrogène) à travers un échangeur de chaleur.

D'une manière parfois avantageuse, ceci en fonction des désiderata du raffineur, le réacteur (5) est suivi d'un second réacteur (5'), soit du même type que le réacteur (5), soit de type adiabatique; l'effluent réactionnel sortant de (5) pénètre dans (5') et en sortie du réacteur (5'), l'effluent réactionnel passe dans un échangeur de chaleur où il va préchauffer le mélange (hydrocarbures + hydrogène).

Il est avantageux de fonctionner dans le second réacteur (5') à une température moyenne supérieure de 5 à 100°C, de préférence de 10 à 50°C, à la température régnant dans le premier réacteur (5).

Ce second réacteur (5') peut être adiabatique. Mais il est souhaitable qu'il soit formé d'un réacteur isotherme du même type que le réacteur (5), la chaleur nécessaire aux réactions de réformage étant apportée directement au sein dudit réacteur (5') également au moyen d'un fluide caloporteur, de préférence à base de fumées (ou gaz de chauffe), par exemple en provenance de la combustion à l'air de mélanges liquides ou gazeux d'hydrocarbures, circulant entre les lits de catalyseur contenus dans le réacteur (5') (ce fluide caloporteur étant identique ou non à celui circulant dans le réacteur (5).

Ce second réacteur (5') peut aussi fonctionner en lits mobiles; pour cela, du catalyseur usé est par exemple soutiré en continu vers le bas du réacteur (5') et continuellement remplacé par du catalyseur frais (ou/et régénéré) introduit vers le sommet dudit réacteur (5').

Dans l'échangeur de chaleur, l'effluent réactionnel se refroidit et les essences, dont le nombre d'octane recherché (NOR) a été porté aux environs de 100, sont au moins partiellement condensées.

Cet effluent est ensuite amené par exemple dans un condenseur final où les essences achèvent de se condenser.

A la sortie de ce condenseur, l'effluent passe par exemple dans un séparateur qui permet de séparer le réformat d'un mélange gazeux riche en hydrogène.

Du fond du séparateur, on soutire les essences obtenues qui forment le réformat et on les amène de préférence vers une zone de stabilisation.

Le mélange gazeux riche en hydrogène sort du séparateur par un conduit situé vers son sommet. On récupère de l'hydrogène et on le recycle à l'aide d'un compresseur dans une zone de mélange avec la charge.

Dans le réacteur (5) (voir figures), la chaleur nécessaire aux réactions de réformages est, comme nous l'avons vu précédemment, apportée par un fluide caloporteur, de préférence à base de fumées (ou gaz de chauffe ou gaz de fumées).

A cet effet, de l'air est aspiré et préchauffé à une température comprise habituellement entre 60 et 300°C, de préférence entre 100 et 250°C.

Cet air préchauffé passe ensuite par un conduit dans un brûleur (T) (zone de brûlage), contenu dans l'enceinte réactionnelle (E),où il sert de carburant à un mélange d'hydrocarbures, par exemple du gaz naturel, amené par un conduit (ces conduits sont schématisés sur les figures par une seule ligne 80).

La quantité d'air utilisée est avantageusement comprise entre 1 et 5 fois, de préférence entre 1 et 3,2 fois, la quantité d'air stoechiométrique nécessaire à la combustion du mélange d'hydrocarbures utilisé.

La température des gaz de fumées (ou gaz de chauffe) est préférentiellement réglée à une température comprise le plus souvent entre 400 et 900°C, de préférence entre 450 et 750°C, et elle est ajustée en fonction du niveau de la strate par rapport au niveau de la zone d'entrée de la charge dans le réacteur.

Dans le cas où on utilise un second réacteur (5') du même type que le premier réacteur (5), la chaleur nécessaire aux réactions de réformage dans le réacteur (5') peut également être apportée par un fluide caloporteur de préférence à base de fumées (ou gaz de fumées ou gaz de chauffe). La formation et le cheminement du fluide caloporteur sont par exemple analogues à ceux décrits précédemment dans le cas du réacteur (5).

Les exemples suivants illustrent l'invention sans toutefois en limiter la portée.

**Exemple 1 (comparatif)**

Dans une unité pilote de réformage catalytique, dont le réacteur a été réalisé selon les figures 5 à 9 et 10A, dont les lits catalytiques sont mobiles ($l_1 = 2.500$ mm, $l_2 = 800$ mm, $l_3 = 90$ mm et $l_3/dp_m = 15$), mais dont l'enceinte réactionnelle (E) ne comporte pas de moyen de stratification mais comporte trois brûleurs $T_1$, $T_2$ et $T_3$, on utilise le catalyseur décrit ci-après et on injecte une charge (naphta) dont la composition est donnée ci-après, mélangée avec de l'hydrogène dans un rapport molaire de 4.

Le catalyseur employé est à base de platine, de chlore et de rhénium (en poids: 0,35 % Pt; 0,25 % Re; 1,12 % cl) et est supporté par de l'alumine (de surface specifique 200 m²/g et de volume poreux 0,57 cm³/g).

La charge d'hydrocarbures à traiter a la composition suivante:

Paraffines :     55,3 %
Naphtènes :     38,7 %
Aromatiques :     6,0 %

La charge entre dans le réacteur (figure 5) à 450°C et on règle sa température grâce à un débit de gaz de fumées dont la température d'entrée est maintenue à la valeur de 650°C en mélangeant des fumées de four avec des fumées de sortie dudit réacteur qui se trouvent à 510°C.

Le taux de recyclage des fumées (en rapport pondéral) est de 9 environ et l'excès d'air utilisé est d'environ 10 %.

En sortie, on condense le réformat obtenu, on recycle l'hydrogène nécessaire au mélange à l'entrée et on règle la purge des gaz fabriqués de façon à obtenir une pression de sortie égale à 0,23 Mpa.

Le débit massique horaire de charge est réglé de manière à obtenir un réformat de 98 NOR.

A ce moment, on note que:

- le rapport entre le débit massique horaire injecté et la masse du catalyseur contenu dans le réacteur est égal à 3,3;
- la pression à l'entrée du réacteur est égale à 0,25 MPa;
- la température des réactifs, bien qu'égale à 495°C à la sortie, connaît cependant un minimum à 420°C au sein du réacteur;
- les rendements s'établissent de la manière suivante (% poids par rapport à la charge):
  . $H_2$ :     3,6 %
  . $C_{1-2}$ :     2,2 %
  . $C_{3-4}$ :     4,6 %
  . Réformat ($C_{5+}$) :     89,6 %

En dépit d'une température d'entrée (450°C) faible,grâce à la marche basse pression que permet ce système réactionnel isotherme, on obtient un bon rendement en réformat et en hydrogène.

**Exemple 2 (selon l'invention)**

On reproduit l'exemple 1 ci-avant, mais on utilise une enceinte réactionnelle comprenant deux moyens $S_1$ et $S_2$ de stratification du gaz de chauffe dont les plans sont situés respectivement entre les brûleurs $T_1$ et $T_2$

et entre les brûleurs $T_2$ et $T_3$ (voir figures 8 et 9).

La charge entre également dans le réacteur (5) à 450°C et on règle sa température grâce au même débit de fumées dont la température d'entrée est maintenue à la valeur de 650°C.

Les brûleurs sont réglés de manière à ce que les températures de sortie des gaz de fumées du réacteur (5) au niveau de chaque strate créée, $Ts^3$, $Ts^2$, $Ts^1$, soient respectivement égales à 515, 510 et 505°C.

Le taux de recyclage des fumées est de 9 environ et l'excès d'air utilisé d'environ 10 %.

En sortie, on condense le réformat obtenu, on recycle l'hydrogène nécessaire au mélange à l'entrée et on règle la purge des gaz fabriqués de façon à obtenir une pression de sortie du réacteur égale à 0,23 MPa.

Le débit massique horaire de charge est réglé de manière à obtenir un réformat de 98 NOR.

A ce moment, on note que:
- le rapport entre le débit massique horaire injecté et la masse du catalyseur contenu dans le réacteur est égal à 3,3;
- la pression à l'entrée du réacteur est égale à 0,25 MPa;
- les températures des réactifs à la sortie du lit de catalyseur au niveau du centre de la première strate, du centre de la deuxième strate et du centre de la troisième strate sont respectivement égales à 490, 495 et 500°C;
- les rendements s'établissent de la manière suivante (% poids par rapport à la charge):
  - . $H_2$ :          3,8 %
  - . $C_{1-2}$ :          2,0 %
  - . $C_{3-4}$ :          4,2 %
  - . Réformat ($C_{5+}$) :          90,0 %

On obtient ainsi un meilleur rendement en réformat et en hydrogène.

**Revendications**

1.    Enceinte réactionnelle caractérisée en ce qu'elle comprend:
     - un réacteur calandre de forme allongée comportant à une première extrémité au moins un moyen d'introduction d'une charge à traiter, à une deuxième extrémité au moins un moyen d'évacuation de la charge traitée, au moins deux cellules réactionnelles élémentaires, non contiguës entre elles et non contiguës aux parois dudit réacteur, reliées chacune à partir de l'une de leur extrémité audit moyen d'introduction de ladite charge et à partir de leur autre extrémité audit moyen d'évacuation de ladite charge traitée, lesdites cellules réactionnelles élémentaires contenant dans au moins une partie de leur volume au moins un solide pulvérulent et étant séparées les unes des autres, ainsi que des parois dudit réacteur, par un canal s'étendant sur une longueur au moins égale à celle sur laquelle s'étend ledit solide pulvérulent contenu dans lesdites cellules réactionnelles élémentaires,
     - au moins un moyen de mise en circulation dans chaque canal dudit réacteur, de manière sensiblement transversale par rapport à la direction globale de circulation de la charge à traiter dans ledit réacteur, d'au moins un fluide caloporteur contenu dans ladite enceinte réactionnelle,
     - au moins n moyen(s) de stratification du courant de fluide caloporteur, le(s)dit(s) moyen(s) étant positionné(s) de manière sensiblement perpendiculaire à la direction globale de circulation de la charge à traiter dans ledit réacteur et en amont, par rapport au sens de circulation dudit fluide caloporteur, de la face des canaux par laquelle ledit fluide caloporteur pénètre dans lesdits canaux, n étant un nombre entier supérieur ou égal à 1,
     - au moins n + 1 moyens thermiques modifiant chacun l'enthalpie d'une partie dudit fluide caloporteur, chacun desdits moyens étant positionné de part et d'autre d'un plan défini par l'un desdits moyens de stratification et en amont, par rapport au sens de circulation dudit fluide caloporteur, de la face des canaux par laquelle ledit fluide caloporteur pénètre dans lesdits canaux.

2.    Enceinte selon la revendication 1 dans laquelle ledit moyen de mise en circulation du fluide caloporteur est un ventilateur, ledit fluide étant un gaz et ladite enceinte comportant 2 moyens de stratification du courant de fluide caloporteur et 3 moyens thermiques modifiant chacun l'enthalpie d'une partie du fluide caloporteur.

3.    Enceinte selon l'une des revendications 1 et 2 dans laquelle les moyens thermiques modifiant chacun l'enthalpie d'une partie du fluide caloporteur sont des moyens de chauffage.

4.    Enceinte selon la revendication 3 dans laquelle les moyens de chauffage sont des brûleurs alimentés en combustible gazeux, liquide ou solide.

5. Enceinte selon l'une des revendications 1 à 4 dans laquelle ledit réacteur a la forme globale d'un parallélépipède rectangle, ledit moyen de mise en circulation dudit fluide caloporteur est situé dans le prolongement dudit réacteur sensiblement dans le volume compris entre les plans passant par 4 des faces dudit parallélépipède rectangle et lesdits moyens de stratification ainsi que lesdits moyens thermiques modifiant chacun l'enthalpie d'une partie dudit fluide caloporteur sont situés dans un volume compris entre ledit moyen de circulation et la face dudit parallélépipède rectangle à travers laquelle ledit fluide caloporteur pénètre.

6. Enceinte selon l'une des revendications 1 à 5 dans laquelle ledit réacteur comporte en outre:
   - au moins un moyen d'introduction de solide pulvérulent à la partie supérieure dudit réacteur à proximité du moyen d'introduction de la charge à traiter,
   - au moins un moyen d'évacuation dudit solide pulvérulent à la partie inférieure dudit réacteur à proximité du moyen d'évacuation de la charge traitée,
   - au moins deux cellules réactionnelles élémentaires sensiblement verticales, parallélépipédiques et sensiblement parallèles entre elles, séparées les unes des autres, ainsi que des parois du réacteur, par un canal sensiblement parallélépipédique, chacune desdites cellules étant composée des trois compartiments suivants:
       . un distributeur individuel de la charge,
       . un collecteur individuel de la charge traitée,
       . un lit de solide pulvérulent inséré entre ledit distributeur individuel et ledit collecteur individuel, ledit lit étant ouvert, sur toute une face mince sensiblement verticale $F_1$, sur ledit distributeur individuel et ouvert, sur toute la face mince $F_1'$ sensiblement parallèle à $F_1$, sur ledit collecteur individuel, lesdites faces minces $F_1$ et $F_1'$ étant chacune définies par une paroi perméable aux fluides et imperméables aux particules solides, ledit lit communicant, par sa face mince supérieure sensiblement horizontale $F_2$, avec ledit moyen d'introduction du solide et, par sa face mince inférieure sensiblement horizontale $F_2'$ et sensiblement parallèle à $F_2$, avec ledit moyen d'évacuation du solide, ledit lit étant tel que chacune de ses deux faces larges sensiblement verticales est fermée par une paroi étanche dont les prolongements au-delà dudit lit forment des parois étanches dudit distributeur individuel et dudit collecteur individuel,
   - au moins une paroi étanche reliant entre eux les côtés supérieurs sensiblement horizontaux des faces larges en regard de deux lits de solide voisins,
   - au moins une paroi étanche reliant entre eux les côtés inférieurs sensiblement horizontaux desdites faces larges en regard de deux lits de solide voisins,
   - au moins une paroi étanche reliant le côté supérieur sensiblement horizontal de la face large du lit de solide le plus proche de chaque paroi dudit réacteur et sensiblement parallèle à cette paroi à ladite paroi,
   - au moins une paroi étanche reliant le côté inférieur sensiblement horizontal de la face large du lit de solide le plus proche de chaque paroi dudit réacteur et sensiblement parallèle à cette paroi à ladite paroi,
   - au moins un distributeur général de la charge, relié au(x)dit(s) moyen(s) d'introduction de la charge et à tous les distributeurs individuels de la charge par une de leurs faces minces sensiblement horizontales,
   - au moins un collecteur général de la charge traitée, relié au(x)dit(s) moyen(s) d'évacuation de la charge traitée et à tous les collecteurs individuels de la charge traitée par une de leurs faces minces sensiblement horizontales qui est sensiblement diagonalement opposée, par rapport au centre du lit de solide correspondant, à la face mince sensiblement horizontale du distributeur individuel correspondant par laquelle celui-ci est relié au distributeur général.

7. Enceinte selon la revendication 6 dans laquelle ledit réacteur comporte au moins deux cellules réactionnelles élémentaires, chacune desdites cellules étant composée des trois compartiments sensiblement parallélépipédiques suivants:
   - un distributeur individuel de la charge,
   - un collecteur individuel de la charge traitée,
   - un lit de solide pulvérulent inséré entre ledit distributeur individuel et ledit collecteur individuel.

8. Enceinte selon la revendication 6 dans laquelle ledit réacteur comporte au moins deux cellules réactionnelles élémentaires, chacune desdites cellules étant composée des trois compartiments suivants:

- un distributeur individuel de la charge, de forme sensiblement prismatique, dont la section selon un plan sensiblement horizontal a une surface plus grande à proximité du distributeur général de la charge qu'à proximité du collecteur général de la charge traitée,
- un collecteur individuel de la charge, ayant sensiblement, soit la forme d'un parallélépipède rectangle dont la section, selon un plan sensiblement horizontal, a une surface égale à proximité du distributeur général de la charge et à proximité du collecteur général de la charge, soit une forme sensiblement prismatique dont la section, selon un plan sensiblement horizontal, a une surface moins grande à proximité du distributeur général de la charge qu'à proximité du collecteur général de la charge,
- un lit de solide pulvérulent inséré entre ledit distributeur individuel et ledit collecteur individuel.

9. Enceinte selon l'une des revendications 1 à 8 dans laquelle dans chaque canal dudit réacteur situé entre deux cellules réactionnelles élémentaires voisines ou entre une paroi du réacteur et la cellule élémentaire la plus proche de cette paroi, on aménage des conduits adjacents sensiblement parallèles entre eux, lesdits conduits ayant une section de forme triangulaire, carrée, rectangulaire, polygonale ou d'une portion de sinusoïde.

10. Procédé de réformage catalytique, effectué dans une enceinte réactionnelle selon l'une des revendications 1 à 9, dans lequel on fait circuler une charge d'hydrocarbures, dans des conditions de réformage, en présence d'hydrogène, à travers une zone de réaction dans laquelle la pression est comprise entre 0,05 et 2,0 MPa, ladite zone renfermant, d'une part, au moins deux espaces réactionnels catalytiques élémentaires non adjacents, composés chacun d'une zone individuelle de distribution, d'une zone individuelle de collecte et d'un lit de catalyseur inséré entre les deux dites zones, et, d'autre part, des espaces internes creux, lesdits espaces réactionnels catalytiques élémentaires et lesdits espaces internes creux étant disposés sensiblement verticalement et sensiblement parallèlement entre eux, chaque espace réactionnel catalytique élémentaire étant pris en sandwich entre au moins deux espaces internes creux dans lesquels circule sensiblement horizontalement le fluide caloporteur, ledit fluide étant divisé en n strates, l' enthalpie de chaque strate étant ajustée à la valeur désirée par apport de calories, ledit apport de calories étant effectué dans ou à proximité de la zone de stratification avant l'entrée du fluide caloporteur dans les espaces internes creux lesdites strates de fluide caloporteur apportant chacune la chaleur nécessaire à la réaction de réformage, procédé dans lequel en outre:

- on envoie la charge d'hydrocarbures à l'intérieur d'une zone générale de distribution,
- on répartit ladite charge, en provenance de la zone générale de distribution, dans la zone individuelle de distribution de chaque espace réactionnel catalytique élémentaire,
- on envoie ladite charge, à partir de chaque zone individuelle de distribution, dans chaque lit catalytique correspondant qu'elle traverse sensiblement horizontalement, la charge et le fluide caloporteur circulant alors à co-courants,
- on récupère la charge traitée, à la sortie de chaque lit catalytique, dans la zone individuelle de collecte correspondante,
- on évacue la charge traitée de chaque zone individuelle de collecte dans une zone générale de collecte par laquelle on soutire ensuite ladite charge traitée, procédé dans lequel également, dans chaque espace réactionnel catalytique élémentaire, la position de l'entrée de la charge dans la zone individuelle de distribution est sensiblement diagonalement opposée, par rapport au centre du lit catalytique correspondant à la position de sortie de la charge traitée de la zone individuelle de collecte correspondante.

11. Procédé selon la revendication 10 dans lequel chaque lit de catalyseur est de type mobile, les grains de catalyseur étant introduits en continu à la partie supérieure de chaque lit et soutirés en continu progressivement à la partie inférieure de chaque lit après avoir cheminé de haut en bas à l'intérieur de chaque lit.

12. Procédé selon l'une des revendications 10 et 11 dans lequel ledit fluide caloporteur est un gaz ou un mélange de gaz qui circule, à l'intérieur de chaque espace interne creux, dans des conduits adjacents sensiblement horizontaux à base de tôles ondulées, les sections desdits conduits ayant au choix l'une des formes suivantes: triangulaire, carrée, rectangulaire, polygonale ou d'une portion de sinusoïde.

**Patentansprüche**

1. Reaktionsgefäß, dadurch gekennzeichnet, daß es umfaßt:
   - Einen Kalanderreaktor länglicher Gestalt, der an einem ersten Ende wenigstens ein Mittel zum Einführen einer zu behandelnden Charge, an einem zweiten Ende wenigstens ein Mittel zum Abziehen der behandelten Charge umfaßt sowie wenigstens zwei elementare Reaktionszellen, die untereinander nicht benachbart und an die Wandungen dieses Reaktors nicht angrenzend sind, die je ausgehend von einem ihrer Enden mit diesem Mittel zum Einführen dieser Charge und ausgehend vom anderen ihrer Enden mit diesem Mittel zum Abziehen dieser behandelten Charge ausgestattet sind, wobei diese elemtaren Reaktionszellen in wenigstens einem Teil ihres Volumens wenigstens einen pulverförmigen Feststoff enthalten und voneinander sowie von den Wandungen dieses Reaktors durch einen Kanal getrennt sind, der sich über eine Länge erstreckt, die wenigstens gleich der ist, über die dieser pulverförmige in diesen elementaren Reaktionszellen enthaltene Feststoff sich erstreckt,
   - wenigstens ein Mittel, um in jedem Kanal dieses Reaktors im wesentlichen quer bezogen auf die Hauptzirkulationsrichtung der zu behandelnden Charge in diesem Reaktor wenigstens ein Wärmeträgerfluid, das in diesem Reaktionsgefäß enthalten ist, in Zirkulation zu versetzen,
   - wenigstens n Mittel zur Schichtung des Stroms des Wärmeträgerfluids wobei das oder diese Mittel im wesentlichen senkrecht zur Hauptzirkulationsrichtung der zu behandelnden Charge in diesem Reaktor positioniert sind und anströmseitig bezogen auf die Zirkulationsrichtung dieses Wärmeträgerfluids der Fläche der Kanäle ist, über die dieses Wärmeträgerfluid in diese Kanäle eintritt, wobei n eine ganze Zahl größer oder gleich 1 ist,
   - wenigstens n + 1 thermische Mittel, die je die Enthalpie eines Teils dieses Wärmeträgerfluids modifizieren, wobei jedes dieser Mittel zu beiden Seiten einer Ebene positioniert ist, welche durch eines dieser Schichtungsmittel definiert ist und anströmseitig bezogen auf die Zirkulationsrichtung dieses Wärmeträgerfluids der Fläche der Kanäle, über die dieses Wärmeträgerfluid in diese Kanäle eintritt.

2. Gefäß nach Anspruch 1, bei dem dieses Mittel zur Inzirkulationsnahme des Wärmeträgerfluids ein Ventilator ist, wobei das Fluid ein Gas ist und dieses Gefäß 2 Schichtenbildungsmittel für den Wärmeträgerfluidstrom sowie 3 thermische Mittel umfaßt, die je die Enthalpie eines Teiles des Wärmeträgerfluids modifizieren.

3. Gefäß nach Anspruch 1 und 2, in dem die thermischen Mittel, die je die Enthalpie eines Teils des Wärmeträgerfluids modifizieren, Heizmittel sind.

4. Gefäß nach Anspruch 3, bei dem die Heizmittel Brenner sind, die mit gasförmigem, festem oder flüssigem Brennstoff gespeist sind.

5. Gefäß nach einem der Ansprüche 1 bis 4, bei dem dieser Reaktor die allgemeine Form eines rechtwinkeligen Parallelepipeds hat, wobei dieses Mittel, um dieses Wärmeträgerfluid in Zirkulation zu versetzen, in der Verlängerung dieses Reaktors im wesentlichen in dem Volumen sich befindet, das zwischen den Ebenen vorhanden ist, welche durch 4 der Flächen dieses rechtwinkeligen Parallelepipeds gehen, und diese Schichtbildungsmittel sowie die thermischen Mittel, die jeweils die Enthalpie eines Teiles dieses Wärmeträgerfluids modifizieren, in einem Volumen angeordnet sind, das zwischen dem Zirkulationsmittel und der Fläche dieses rechtwinkeligen Parallelepipeds vorhanden ist, quer durch die dieses Wärmeträgerfluid eintritt.

6. Gefäß nach einem der Ansprüche 1 bis 5, bei dem dieser Reaktor außerdem umfaßt:
   - wenigstens ein Mittel zum Einführen pulverförmigen Feststoffes am oberen Teil dieses Reaktors benachbart dem Mittel zum Einführen der zu behandelnden Charge,
   - wenigstens ein Mittel zum Abziehen dieses pulverförmigen Feststoffs am unteren Teil dieses Reaktors benachbart dem Mittel zum Abziehen der behandelten Charge,
   - wenigstens zwei elemtare im wesentlichen vertikale parallelepipedförmige und im wesentlichen zueinander parallele Zellen voneinander sowie von den Wandungen des Reaktors über einen im wesentlichen parallelepipedförmigen Kanal getrennt, wobei jede dieser Zellen aus den drei folgenden Kammern zusammengesetzt ist:
     . einem individuellen Verteiler der Charge,
     . einem individuellen Kollektor der behandelnden Charge,

. einem pulverförmigen Feststoffbett, das zwischen diesem individuellem Verteiler und diesem individuellen Sammler eingeführt ist, wobei dieses Bett über eine gesamte dünne im wesentlichen vertikale Fläche $F_1$ gegen diesen individuellen Verteiler offen ist und auf der dünnen im wesentlichen parallel zu $F_1$ befindlichen Fläche $F_1'$ auf diesem individuellen Kollektor offen ist, wobei diese dünnen Flächen $F_1$ und $F_1'$ je definiert sind durch eine für die Fluide permeable und für die Feststoffpartikel impermeable Wand, wobei dieses Bett über seine obere dünne im wesentlichen horizontale Fläche $F_2$ mit diesem Mittel zum Einführen des Feststoffs und über seine dünne untere im wesentlichen horizontale Fläche $F_2'$, die im wesentlichen parallel zu $F_2$ ist, mit diesem Mittel zum Abziehen des Feststoffs in Verbindung steht, wobei dieses Bett derart ist, daß jede seiner beiden großen im wesentlichen vertikalen Flächen geschlossen ist durch eine dichte Wand, deren Verlängerung über dieses Bett hinaus dichte Wandungen für diesen individuellen Verteiler und diesen individuellen Sammler bilden,
- wenigstens eine dichte Wand, welche miteinander die oberen im wesentlichen horizontalen Seiten der großen Flächen gegenüber den beiden benachbarten Feststoffbetten verbinden,
- wenigstens eine dichte Wand, welche miteinander die unteren im wesentlichen horizontalen Seiten dieser großen Flächen gegenüber den beiden benachbarten Feststoffbetten in Verbindung setzen,
- wenigstens eine dichte Wand, welche die obere im wesentlichen horizontale Seite der großen Fläche des Feststoffbettes, die jeder Wand dieses Reaktors am weitesten benachbart ist und im wesentlichen zu dieser Wand parallel ist, mit dieser Wand verbindet,
- wenigstens eine dichte Wand, welche die untere im wesentlichen horizontale Seite der großen Fläche des Feststoffbettes, die jeder Wand dieses Reaktors am weitesten benachbart und parallel zu dieser Wand ist, mit dieser Wand verbindet,
- wenigstens einem allgemeinen Verteiler der Charge, der mit diesem oder diesen Mitteln zum Einführen der Charge und mit sämtlichen Einzelverteilern der Charge über eine seiner dünnen im wesentlichen horizontalen Flächen verbunden ist,
- wenigstens ein allgemeiner Kollektor für die behandelte Charge, der mit dem oder den Mitteln zum Abziehen der behandelten Charge und mit sämtlichen einzelnen Kollektoren für die behandelte Charge über eine ihrer dünnen im wesentlichen horizontalen Flächen verbunden ist, welche im wesentlichen diagonal bezogen auf die Mitte des entsprechenden Feststoffbettes der dünnen im wesentlichen horizontalen Fläche dieses individuellen Verteilers gegenüber liegt, über die sie mit dem allgemeinen Verteiler verbunden ist.

7. Gefäß nach Anspruch 6, bei dem dieser Reaktor wenigstens zwei elementare Reaktionszellen umfaßt, wobei jede dieser Zellen aus drei im wesentlichen parallelepipedförmigen folgenden Kammern zusammengesetzt ist:
- einem individuellen Verteiler der Charge,
- einem individuellen Kollektor der behandelten Charge,
- einem pulverförmigen Feststoffbett, das zwischen diesem individuellen Verteiler und diesem individuellen Kollektor eingeführt ist.

8. Gefäß nach Anspruch 6, bei dem dieser Reaktor wenigsten zwei elementare Reaktionszellen umfaßt, wobei jede dieser Zellen aus drei der folgenden Kammern zusammengesetzt ist:
- einem individuellen Verteiler für die Charge im wesentlichen prismatischer Gestalt, dessen Querschnitt gemäß einer im wesentlichen horizontalen Ebene eine größere Fläche benachbart dem allgemeinen Verteiler der Charge als benachbart dem allgemeinen Kollektor der behandelten Charge hat,
- einem individuellen Kollektor der Charge, der im wesentlichen entweder die Form eines rechtwinkeligen Parallelepipeds hat, dessen Querschnitt gemäß einer im wesentlichen horizontalen Ebene eine Fläche gleich benachbart dem allgemeinen Verteiler der Charge und benachbart dem allgemeinen Kollektor der Charge oder eine im wesentlichen prismatische Form hat, deren Querschnitt gemäß einer im wesentlichen horizontalen Ebene eine weniger große Fläche als benachbart dem allgemeinen Verteiler der Charge als benachbart dem allgemeinen Kollektor der Charge hat,
- und einem pulverförmigen Feststoffbett, das zwischen diesem individuellen Verteiler und diesem individuellen Kollektor eingeführt ist.

9. Gefäß nach einem der Ansprüche 1 bis 8, in dem in jedem Kanal dieses Reaktors, der zwischen zwei elementaren benachbarten Reaktionszellen oder zwischen einer Wandung des Reaktors und der dieser Wandung am weitesten benachbarten Reaktionszelle angeordnet ist, man benachbarte zueinander im wesentlichen parallele Leitungen vorsieht, wobei die Leitungen einen Querschnitt dreieckiger, quadratischer, rechtwinkeliger, polygonaler Gestalt oder eines Teils eines Sinuids haben.

10. Verfahren zum katalytischen Reformieren, durchgeführt in einem Reaktionsgefäß gemäß einem der Ansprüche 1 bis 9, bei dem man eine Rohlenwasserstoffcharge unter Reformierungsbedingungen in Anwesenheit von Wasserstoff quer durch eine Reaktionszone zirkulieren läßt, in der der Druck zwischen 0,05 und 2,0 MPa beträgt, wobei diese Zone einerseits wenigstens zwei katalytische elementare nicht benachbarte Reaktionsräume umfaßt, die je zusammengesetzt sind aus einer individuellen Verteilerzone, einer individuellen Rollektorzone und einem Ratalysatorbett, das zwischen diese beiden Zonen eingeführt ist und andererseits inneren Hohlräumen, wobei diese katalytischen elementaren Räume und diese inneren Hohlräume im wesentlichen vertikal und im wesentlichen zueinander parallel angeordnet sind, wobei jeder katalytische elementare Reaktionsraum sandwichartig zwischen wenigstens zwei inneren hohlen Räumen erfaßt ist, in denen im wesentlichen horizontal das Wärmeträgerfluid zirkuliert, wobei das Fluid in n Schichten aufgeteilt ist, wobei die Enthalpie jeder Schicht eingestellt ist auf den durch die Zufuhr von Kalorien gewünschten Wert, wobei die Kalorienzufuhr vorgenommen wird in oder benachbart der Schichtenbildungszone vor dem Eintritt des Wärmeträgerfluids in die hohlen Innenräume, wobei die Schichten des Wärmeträgerfluids je die zur Reaktion der Reformierung notwendige Wärme zubringen, Verfahren, bei dem man im übrigen:
   - die Kohlenwasserstoffcharge in das Innere einer allgemeinen Verteilerzone schickt,
   - man diese Charge, die aus der allgemeinen Verteilerzone stammt, in die individuelle Verteilerzone jedes katalytischen elementaren Reaktionsraums verteilt,
   - man diese Charge ausgehend von jeder individuellen Verteilerzone in jedes entsprechende katalytische Bett, die sie im wesentlichen horizontal durchsetzt, schickt, wobei die Charge und das Wärmeträgerfluid dann im Gleichstrom zirkuliert,
   - man die behandelte Charge am Austritt jedes katalytischen Bettes in der individuellen entsprechenden Sammlerzone gewinnt,
   - man die behandelte Zone aus jeder individuellen Sammlerzone in eine allgemeine Kollektorzone abzieht, aus der man anschließend diese behandelte Charge absaugt, Verfahren, bei dem ebenfalls in jedem elementaren katalytischen Reaktionsraum die Position des Eintritts der Charge in die individuelle Verteilerzone im wesentlichen diagonal gegenüberliegend bezogen auf die Mitte des entsprechenden katalytischen Bettes zur Position des Austritts der behandelten Charge aus der individuellen entsprechenden Kollektorzone sich befindet.

11. Verfahren nach Anspruch 10, bei dem jedes Katalysatorbett vom beweglichen Typ ist, wobei die Katalysatorkörner kontinuierlich im oberen Teil jedes Bettes eingeführt werden und kontinuierlich progressiv am unteren Teil jedes Bettes abgezogen werden, nachdem sie im Innern jedes Bettes von oben nach unten gewandert sind.

12. Verfahren nach Anspruch 10 und 11, bei dem dieses Wärmeträgerfluid ein Gas oder ein Gasgemisch ist, das im Innern jedes hohlen Innenraums in benachbarten im wesentlichen horizontalen Leitungen an der Basis gewellter Bleche zirkuliert, wobei die Querschnitte dieser Leitung nach Wahl eine der folgenden Formen haben: dreieckig, quadratisch, rechtwinkelig, polygonal oder Teil eines Sinuids.

## Claims

1. A reaction chamber characterized in that it comprises :
   - an extended calender reactor comprising at a first end at least one means for introducing a feedstock to be treated, at a second end at least one means for carrying off the treated charge, at least two elementary reaction cells, not contiguous in relation to one another and not contiguous to the walls of said reactor, each one linked from one of their ends to said means for introducing said feedstock and from their other end to said means for carrying off said treated feedstock, said elementary reaction cells containing in at least part of their volume at least one powdery solid and being separated from one another, as well as from the walls of said reactor, by a channel stretching over a length at least equal to that over which said powdery solid contained in said elementary reaction cells stretches,
   - at least one means for circulating in each channel of said reactor, in a substantially transverse way in relation to the overall direction of circulation of the feedstock to be treated in said reactor, at least one heat-carrying fluid contained in said reaction chamber,

- at least n means for bedding the flow of heat-carrying fluid, said means being positioned in a substantially perpendicular way in relation to the overall direction of circulation of the feedstock to be treated in said reactor and upstream, in relation to the direction of circulation of said heat-carrying fluid, from the face of the channels through which said heat-carrying fluid enters said channels, n being an integer greater than or equal to 1,
- at least n + 1 thermal means each one modifying the enthalpy of part of said heat-carrying fluid, each one of said means being positioned on either side of a plane defined by one of said bedding means and upstream, in relation to the direction of circulation of said heat-carrying fluid, from the face of the channels through which said heat-carrying fluid enters said channels.

2. A chamber according to claim 1 wherein said means for circulating the heat-carrying fluid is a ventilator, said fluid being a gas and said chamber comprising 2 means for bedding the flow of heat-carrying fluid and 3 thermal means each one modifying the enthalpy of part of the heat-carrying fluid.

3. A chamber according to any one of claims 1 and 2 wherein the thermal means modifying each one the enthalpy of part of the heat-carrying fluid are heating means.

4. A chamber according to claim 3 wherein the heating means are burners supplied with gaseous, liquid or solid fuel.

5. A chamber according to any one of claims 1 to 4 wherein said reactor has the overall shape of a right-angled parallelepiped, said means for circulating said heat-carrying fluid is located in the extension of said reactor substantially in the volume contained between the planes going through 4 of the faces of said right-angled parallelepiped and said bedding means, as well as said thermal means modifying each one the enthalpy of part of said heat-carrying fluid, are located in a volume contained between said circulating means and the face of said right-angled parallelepiped through which said heat-carrying fluid enters.

6. A chamber according to any one of claims 1 to 5 wherein said reactor also comprises :
- at least one means for introducing a powdery solid at the upper part of said reactor close to the means for introducing the feedstock to be treated,
- at least one means for carrying off said powdery solid at the lower part of said reactor close to the means for carrying off the treated feedstock,
- at least two elementary reaction cells substantially vertical, parallelepipedic and substantially parallel in relation to one another, separated from one another, as well as from the walls of the reactor, by a substantially parallelepipedic channel, each one of said cells consisting of the following three compartments :
  . an individual feedstock distributor,
  . an individual collector of the treated feedstock,
  . a powdery solid bed inserted between said individual distributor and said individual collector, said bed being open, on a total thin, substantially vertical face $F_1$, onto said individual distributor and open, on the total thin face $F'_1$ substantially parallel to $F_1$, onto said individual collector, said thin faces $F_1$ and $F'_1$ being each defined by a wall permeable to fluids and impermeable to solid particles, said bed communicating, through its upper thin, substantially horizontal face $F_2$, with said means for introducing the solid and, through its lower thin, substantially horizontal face $F'_2$ substantially parallel to $F_2$, with said means for carrying off the solid, said bed being such that each one of its two wide, substantially vertical faces is closed by a tight wall whose extensions beyond said bed form tight walls of said individual distributor and of said individual collector,
- at least one tight wall linking together the substantially horizontal upper sides of the wide faces in relation to two neigbouring solid beds,
- at least one tight wall linking together the substantially horizontal lower sides of said wide faces in relation to two neighbouring solid beds,
- at least one tight wall linking the substantially horizontal upper side of the wide face of the solid bed that is closest to each wall of said reactor and substantially parallel to this wall to said wall,
- at least one tight wall linking the substantially horizontal lower side of the wide face of the solid bed that is closest to each wall of said reactor and substantially parallel to this wall to said wall,
- at least one general feedstock distributor, linked to said means for introducing the feedstock and to all the individual feedstock distributors by one of their substantially horizontal thin faces,
- at least one general collector of the treated feedstock, linked to said means for carrying off the treated feedstock and to all the individual collectors of the treated feedstock by one of their substantially horizontal thin faces which is substantially diagonally opposite, in relation to the center of the corresponding solid bed, the substantially horizontal thin face of the corresponding individual distributor through which the latter is linked to the general distributor.

7. A chamber according to claim 6 wherein said reactor comprises at least two elementary reaction cells, each one of said cells consisting of the following substantially parallelepipedic three compartments :
   - an individual feedstock distributor,
   - an individual collector of the treated feedstock,
   - a powdery solid bed inserted between said individual distributor and said individual collector.

8. A chamber according to claim 6 wherein said reactor comprises at least two elementary reaction cells, each one of said cells consisting of the following three compartments :
   - an individual feedstock distributor, of a substantially prismatic shape, whose section following a substantially horizontal plane has a greater surface close to the general feedstock distributor than close to the general collector of the treated feedstock,
   - an individual feedstock collector, having substantially either the shape of a right-angled parallelepiped whose section, following a substantially horizontal plane, has an equal surface close to the general feedstock distributor and close to the general feedstock collector, or a substantially prismatic shape whose section, following a substantially horizontal plane, has a surface that is less large close to the general feedstock distributor than close to the general feedstock collector,
   - a powdery solid bed inserted between said individual distributor and said individual collector.

9. A chamber according to any one of claims 1 to 8 wherein, in each channel of said reactor located between two neighbouring elementary reaction cells or between a reactor wall and the lattice cell that is closest to this wall, adjacent ducts substantially parallel to one another are arranged, said ducts having a section of a triangular, square, rectangular, polygonal shape or of the shape of a portion of a sinusoid.

10. A catalytic reforming process performed in a reaction chamber according to any one of claims 1 to 9, wherein a hydrocarbon feedstock is circulated under reforming conditions, in the presence of hydrogen, through a reaction zone in which the pressure ranges between 0.05 and 2.0 MPa, said zone comprising, on one hand, at least two non adjacent elementary catalytic reaction spaces, each one consisting of an individual distribution zone, an individual collection zone and a catalyst bed inserted between said two zones, and, on the other hand, hollow inner spaces, said lattice catalytic reaction spaces and said hollow inner spaces being arranged substantially vertically and substantially parallel to one another, each lattice catalytic reaction space being sandwiched between at least two hollow inner spaces in which the heat-carrying fluid circulates substantially horizontally, said fluid being divided into n layers, the enthalpy of each layer being adjusted to the required value by a heat input, said heat input being achieved in or close to the bedding zone before the inflow of the heat-carrying fluid into the hollow inner spaces, said layers of heat-carrying fluid supplying each the heat necessary for the reforming reaction, a process in which, besides :
    - the hydrocarbon feedstock is fed into a general distribution zone,
    - said feedstock coming from the general distribution zone is dispatched in the individual distribution zone of each lattice catalytic reaction space,
    - said charge is fed from each individual distribution zone into each corresponding catalytic bed which it passes through substantially horizontally, the feedstock and the heat-carrying fluid then circulating following a cocurrent way,
    - the treated feedstock is recovered at the outlet of each catalytic bed, in the corresponding individual collection zone,
    - the treated feedstock is carried off from each individual collection zone into a general collection zone through which said treated feedstock is withdrawn afterwards, a process in which, besides, in each lattice catalytic reaction space, the inflow position of the feedstock in the individual distribution zone is substantially diagonally opposite, in relation to the center of the corresponding catalytic bed, the outflow position of the treated feedstock from the corresponding individual collection zone.

11. A process according to claim 10 wherein each catalyst bed is of the moving type, the catalyst grains being continuously introduced at the upper part of each bed and continuously withdrawn progressively at the lower part of each bed after circulating downwards inside each bed.

12. A process according to any one of claims 10 and 11 wherein said heat-carrying fluid is a gas or a mixture of gases which circulates, within each hollow inner space, in substantially horizontal adjacent ducts based on corrugated iron, the sections of said ducts having, according to preference, one of the following shapes triangular, square, rectangular, polygonal, or the shape of a portion of a sinusoid.

**FIG.1**

EP 0 438 349 B1

**FIG.2**

**FIG.3**

**FIG.4**

**FIG.5**

**FIG.6**

$l_2$

$F_1$

C

$l_1$

C ⋯▸

C ⋯▸

C ⋯▸

52.3

52.2

52

$F_1'$

52.1

$l_3$

**FIG.10A**

**FIG.10B**

**FIG.10C**

**FIG.7**

54

G

C

53

52.3

52.2 } 52

52.1

G

52   51

**FIG.8**

**FIG.9**

**FIG.11**